# EUROPEAN PATENT SPECIFICATION

(11) **EP 3 885 952 B1**
(45) Date of publication and mention of the grant of the patent: **29.01.2025**
(21) Application number: 18942817.0
(22) Date of filing: 14.12.2018
(51) Int. Cl.: G06N 3/08, G06F 21/55, G06F 21/75, G06N 3/045

(54) **LEARNING IDENTIFICATION DEVICE, LEARNING IDENTIFICATION METHOD, AND LEARNING IDENTIFICATION PROGRAM**
LERNIDENTIFIZIERUNGSVORRICHTUNG, LERNIDENTIFIZIERUNGSVERFAHREN UND LERNIDENTIFIZIERUNGSPROGRAMM
DISPOSITIF D'IDENTIFICATION D'APPRENTISSAGE, PROCÉDÉ D'IDENTIFICATION D'APPRENTISSAGE ET PROGRAMME D'IDENTIFICATION D'APPRENTISSAGE

(43) Date of publication of application: 29.09.2021
(73) Proprietor: Mitsubishi Electric Corporation, Tokyo 100-8310 (JP)
(72) Inventor: NAKAI, Tsunato, Tokyo 100-8310 (JP)
(74) Representative: Pfenning, Meinig & Partner mbB
(86) International application number: PCT/JP2018/046158
(87) International publication number: WO 2020/121527

(56) References cited:
- JP-A- 2001 052 115
- JP-A- 2002 008 027
- US-A1- 2018 307 188
- LEJLA BATINA ET AL: "CSI Neural Network: Using Side-channels to Recover Your Artificial Neural Network Information", ARXIV.ORG, CORNELL UNIVERSITY LIBRARY, 201 OLIN LIBRARY CORNELL UNIVERSITY ITHACA, NY 14853, 22 October 2018 (2018-10-22), XP080926291
- CLEMENT FUNG ET AL: "Dancing in the Dark: Private Multi-Party Machine Learning in an Untrusted Setting", ARXIV.ORG, CORNELL UNIVERSITY LIBRARY, 201 OLIN LIBRARY CORNELL UNIVERSITY ITHACA, NY 14853, 23 November 2018 (2018-11-23), XP080938361
- QUISQUATER J-J: "Side channel attacks - State-of-the-art", INTERNET CITATION, 1 October 2002 (2002-10-01), XP002329914, Retrieved from the Internet <URL:http://www.ipa.go.jp/security/en/CRYPTREC/fy15/doc/1047_Side_Channel_report.pdf> [retrieved on 20050527]
- WEIZHE HUA ET AL.: "Reverse Engineering Convolutional Neural Networks Through Side-channel Information Leaks", DAC' 18 PROCEEDINGS OF THE 55TH ANNUAL DESIGN AUTOMATION CONFERENCE, June 2018 (2018-06-01), pages 1 - 6, XP033405824, Retrieved from the Internet <URL:https://www.csl.cornell.edu/~zhiruz/pdfs/rev-cnn-dac2018.pdf> [retrieved on 20190305]
- NAKAI, TSUNATO; KOBAYASHI, NOBUHIRO: "Timing Attack for Deep Learning: Generation of Adversarial Examples Using Processing Time Differences.", THE 2019 SYMPOSIUM ON CRYPTOGRAPHY AND INFORMATION SECURITY (SCIS 2019), 15 January 2019 (2019-01-15), JP, pages 1 - 8, XP009528099

## Description

### Technical Field

The present invention relates to a learning-and-recognition apparatus, a learning-and-recognition method, and a learning-and-recognition program and, in particular, relates to countermeasures against timing attacks on deep learning.

### Background Art

Samples that deceive a neural network that has performed learning are called adversarial examples. Adversarial examples can be generated artificially.

Conventional adversarial examples are generated based on internal parameters of deep learning or probability information that is output.

According to Non-Patent Literature 1, countermeasures against attacks using adversarial examples include a built-in detection function and introducing and learning anomalous data. Concealing internal parameters or probability information that is output, each of which serves as a clue for an attack, is considered to be one of effective countermeasures. In Non-Patent Literature 1, consideration is not given to information leakage based on the processing time of deep learning.

In conventional countermeasures against timing attacks, attention is focused on countermeasures against leakage of a secret key based on the processing time of an encryption device.

In Patent Literature 1, a countermeasure against leakage is implemented by executing dummy processing while encryption or decryption is being executed, delaying the execution start time of encryption or decryption, causing the amounts of change in data to be uniform, or changing a processing order.

### Citation List

### Patent Literature

Patent Literature 1: JP 2014-192793 A

### Non-Patent Literature

Non-Patent Literature 1: Xiaoyong Yuana, et al., "Adversarial Examples: Attacks and Defenses for Deep Learning" arXiv:1712.07107v3 [cs.LG] 7 Jul 2018 LEJLA BATINA ET AL: "CSI Neural Network: Using Side-channels to Recover Your Artificial Neural Network Information", ARXIVORG, CORNELL UNIVERSITY LIBRARY, 201 OLIN LIBRARY CORNELL UNIVERSITY ITHACA, NY 14853, 22 October 2018 (2018-10-22) discloses a multi layer perceptron as the machine learning architecture of choice and assume a passive attacker capable of measuring only passive side-channels like power, electromagnetic radiation, and timing. CLEMENT FUNG ET AL: "Dancing in the Dark: Private Multi-Party Machine Learning in an Untrusted Setting", ARXIV.ORG, CORNELL UNIVERSITY LIBRARY, 201 OLIN LIBRARY CORNELL UNIVERSITY ITHACA, NY 14853, 23 November 2018 (2018-11-23) discloses a brokered learning abstraction that allows data sources to contribute towards a globally-shared model with provable privacy guarantees in an untrusted setting.
QUISQUATER J-J: "Side channel attacks - State-of-the-art", INTERNET CITATION, 1 October 2002 (2002-10-01), Retrieved from the Internet: URL: http://www.iap.go.jp/security/en/CRYPTREC/fy15/doc/1047 Side Channel report.pdf [retrieved on 2005-05-27] discloses the state-of-the-art about side channel crypt-analysis. It will describe the various side channels known in the literature and discuss them from various points of view.

### Summary of Invention

### Technical Problem

An attacker on deep learning may generate adversarial examples based on the relationship between input data and the processing time. Since the attacker focuses on the relationship between input data and the processing time, a problem is that attacks cannot be prevented by concealing internal parameters or probability information, which is a conventional countermeasure.

Another problem is that the conventional countermeasures against timing attacks are specifically for encryption devices and cannot be directly applied to deep learning.

It is an object of the present invention to provide countermeasures against timing attacks on deep learning.

### Solution to Problem

The invention is defined by the independent claims. Preferable embodiments are defined by the dependent claims.

A learning-and-recognition apparatus according to one aspect of the present invention includes
a learning-and-recognition unit to perform learning-and-recognition processing on input data, and output output data; and
a time control unit to cause a processing time of the learning-and-recognition processing on the input data to be independent of the input data;
wherein the time control unit (111) includes an input control unit (112) to perform processing on the input data to change the processing time of the learning-and-recognition processing; and applying random noise to the input data (101) anterior to the learning-and-recognition unit (102) by a data masking unit (201) included in the time control unit (111).

### Advantageous Effects of Invention

In the present invention, a time control unit causes the processing time on input data to be independent of the input data, so that defense against attacks on a learning-and-recognition apparatus can be provided.

### Brief Description of Drawings

Fig. 1 is an overall configuration diagram of a learning-and-recognition apparatus according to a first embodiment;
Fig. 2 is an operation chart of the learning-and-recognition apparatus according to the first embodiment;
Fig. 3 is an overall configuration diagram of a learning-and-recognition apparatus according to a second embodiment;
Fig. 4 is an operation chart of the learning-and-recognition apparatus according to the second embodiment;
Fig. 5 is an overall configuration diagram of a learning-and-recognition apparatus according to a third embodiment;
Fig. 6 is an operation chart of the learning-and-recognition apparatus according to the third embodiment;
Fig. 7 is an overall configuration diagram of a learning-and-recognition apparatus according to a fourth embodiment;
Fig. 8 is an operation chart of the learning-and-recognition apparatus according to the fourth embodiment;
Fig. 9 is an overall configuration diagram of a learning-and-recognition apparatus according to a fifth embodiment;
Fig. 10 is an operation chart of the learning-and-recognition apparatus according to the fifth embodiment;
Fig. 11 is an overall configuration diagram of the learning-and-recognition apparatus according to the fifth embodiment; and
Fig. 12 is an overall configuration diagram of a learning-and-recognition apparatus according to a sixth embodiment.

### Description of Embodiments

The invention is defined by the independent claims. Preferable embodiments are defined by the dependent claims. Embodiments of the present invention will be described hereinafter with reference to the drawings. Throughout the drawings, the same or corresponding parts are denoted by the same reference sign. In the description of the embodiments, description of the same or corresponding parts will be suitably omitted or simplified.

Countermeasures against timing attacks to be described in the embodiments to be discussed hereinafter are to cause the processing time on input data to be independent of the input data. In other words, the countermeasures against timing attacks to be described in the embodiments are to cause a time period from an input time point of input data to an output time point of output data to be independent of the input data, and output the output data.

In the embodiments, the following countermeasures against timing attacks will be described.
1. Countermeasures using inputs to deep learning
   First embodiment: countermeasure of masking input data
   Second embodiment: countermeasure of randomizing input timings
2. Countermeasures using outputs from deep learning
   Third embodiment: countermeasure of randomizing output timings
   Fourth embodiment: countermeasure of causing processing times to be uniform
3. Countermeasures within deep learning
   Fifth embodiment: countermeasure of causing internal processing times to be random or uniform

### First Embodiment

A configuration of an apparatus according to this embodiment, operation of the apparatus according to this embodiment, and effects of this embodiment will be described.

### *** Description of Configuration ***

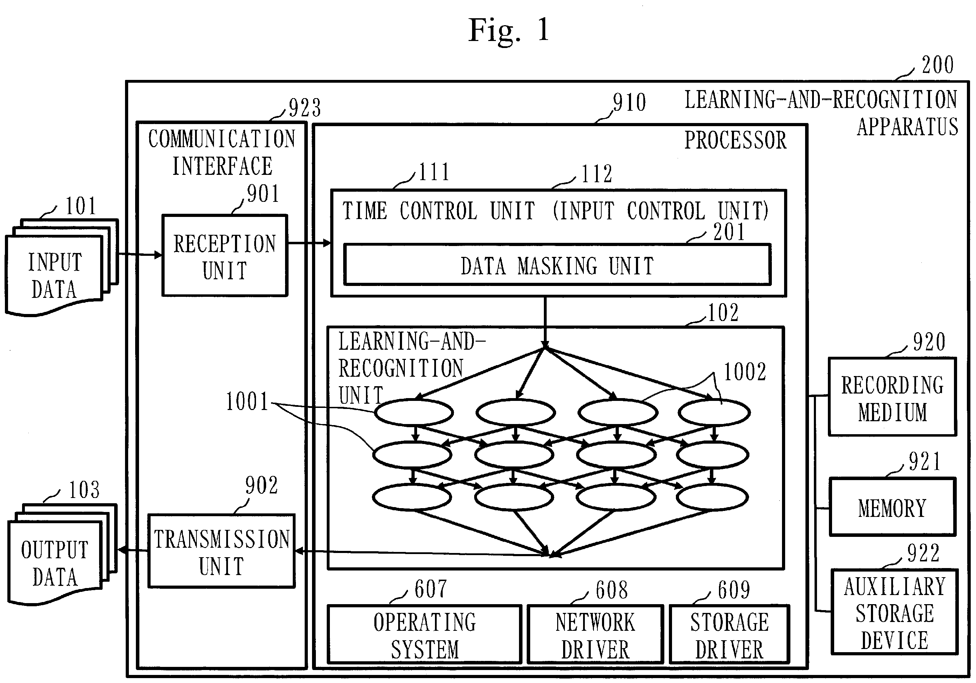

Fig. 1 is a configuration diagram of a learning-and-recognition apparatus 200.

The learning-and-recognition apparatus 200 is an apparatus that performs recognition work on input data while learning the input data.

The learning-and-recognition apparatus 200 has a learning-and-recognition unit 102.

The learning-and-recognition unit 102 performs learning-and-recognition processing on input data 101 and outputs output data 103.

The learning-and-recognition unit 102 conducts deep learning.

The learning-and-recognition unit 102 has a plurality of neural network layers 1001.

Each of the neural network layers 1001 executes a plurality of perceptron processes 1002.

The learning-and-recognition unit 102 executes the perceptron processes 1002 in parallel as calculations of each of the neural network layers 1001.

The learning-and-recognition unit 102 outputs calculation results of the perceptron processes 1002 of the final neural network layer 1001.

The learning-and-recognition apparatus 200 has a time control unit 111.

The time control unit 111 causes the processing time on the input data 101 by the learning-and-recognition unit 102 to be independent of the input data 101.

The time control unit 111 has an input control unit 112.

The input control unit 112 performs processing on the input data 101 to change the processing time of the learning-and-recognition unit 102.

The input control unit 112 has a data masking unit 201.

The data masking unit 201 applies random noise to the input data 101.

In the learning-and-recognition apparatus 200, the data masking unit 201 to apply random noise to the input data 101 is added anterior to the learning-and-recognition unit 102, so as to cause the input data 101 and the processing time of the learning-and-recognition apparatus 200 to be independent of each other.

The meanings of terms to be used in the description of the embodiments are as indicated below.

"Learning-and-recognition processing": processing executed by the learning-and-recognition apparatus 200.

"Processing of the learning-and-recognition apparatus 200": the same as "learning-and-recognition processing".

"Processing time of learning-and-recognition processing": a time period from a time point when the input data 101 is input to the learning-and-recognition apparatus 200 to a time point when the output data 103 is output from the learning-and-recognition apparatus 200.

"Processing time of the learning-and-recognition apparatus 200": the same as "processing time of learning-and-recognition processing".

"Processing of the learning-and-recognition unit 102": processing executed by the learning-and-recognition unit 102.

"Processing time of the learning-and-recognition unit 102": a time period from a time point when the input data 101 is input to the learning-and-recognition unit 102 to a time point when the output data 103 is output from the learning-and-recognition unit 102.

When the "processing time of the learning-and-recognition unit 102" changes, the "processing time of the learning-and-recognition apparatus 200" or the "processing time of learning-and-recognition processing" also changes.

In the following, the embodiments will be described assuming that data input/output times of a reception unit 901 and a transmission unit 902 are negligible.

### *** Description of Hardware Configuration ***

The learning-and-recognition apparatus 200 includes a processor 910.

The learning-and-recognition apparatus 200 includes other hardware components, such as a memory 921, an auxiliary storage device 922, a communication interface 923, and a recording medium 920.

The processor 910 is connected with other hardware components via signal lines and controls these other hardware components.

The learning-and-recognition apparatus 200 includes the time control unit 111 and the learning-and-recognition unit 102 as functional elements.

The functions of the time control unit 111 and the learning-and-recognition unit 102 are realized by software.

The processor 910 is a device that executes a learning-and-recognition program.

The learning-and-recognition program is a program for realizing the functions of the time control unit 111 and the learning-and-recognition unit 102.

The processor 910 is an integrated circuit (IC) that performs operational processing. A specific example of the processor 910 is a central processing unit (CPU), a digital signal processor (DSP), or a graphics processing unit (GPU).

The memory 921 is a storage device to temporarily store data.

A specific example of the memory 921 is a static random access memory (SRAM) or a dynamic random access memory (DRAM).

The recording medium 920 and the auxiliary storage device 922 are storage devices to store data.

A specific example of each of the recording medium 920 and the auxiliary storage device 922 is a hard disk drive (HDD).

Each of the recording medium 920 and the auxiliary storage device 922 may be a portable storage medium, such as a NAND flash, a flexible disk, an optical disc, a compact disc, or a digital versatile disk (DVD).

The communication interface 923 has the reception unit 901 to receive data and the transmission unit 902 to transmit data.

The communication interface 923 has a communication chip, a network interface card (NIC), or the like.

The learning-and-recognition program is read from the memory 921 into the processor 910 and executed by the processor 910.

The memory 921 stores not only the learning-and-recognition program but also an operating system 607, a network driver 608, and a storage driver 609.

The processor 910 executes the learning-and-recognition program while executing the operating system 607, the network driver 608, and the storage driver 609.

The learning-and-recognition program, the operating system 607, the network driver 608, and the storage driver 609 may be stored in the auxiliary storage device 922.

The learning-and-recognition program, the operating system 607, the network driver 608, and the storage driver 609 that are stored in the auxiliary storage device 922 are loaded into the memory 921 and executed by the processor 910.

Note that part or the entirety of the learning-and-recognition program may be embedded in the operating system 607.

The learning-and-recognition apparatus 200 may include a plurality of processors as an alternative to the processor 910. The plurality of processors share execution of the learning-and-recognition program. Each of the processors is, like the processor 910, a device that executes the learning-and-recognition program.

Data, information, signal values, and variable values that are used, processed, or output by the learning-and-recognition program are stored in the memory 921 or the auxiliary storage device 922, or stored in a register or a cache memory in the processor 910.

The "unit" of each of the time control unit 111 and the learning-and-recognition unit 102 may be interpreted as "process", "procedure", or "step". The "process" of each process of the time control unit 111 and the learning-and-recognition unit 102 may be interpreted as "program", "program product", or "computer readable storage medium recording a program".

The learning-and-recognition program causes a computer to execute each process, each procedure, or each step, where the "unit" of each of the units is interpreted as "process", "procedure", or "step". A learning-and-recognition method is a method performed by execution of the program by the learning-and-recognition apparatus 200.

The program may be stored and provided in a computer readable recording medium. The program may be provided as a program product.

The learning-and-recognition apparatus 200 may be realized by a processing circuit, such as a logic integrated circuit (IC), a gate array (GA), an application specific integrated circuit (ASIC), or a field-programmable gate array (FPGA).

A superordinate concept of a processor, a memory, a combination of a processor and a memory, and a processing circuit is referred to as processing circuitry. That is, each of a processor, a memory, a combination of a processor and a memory, and a processing circuit is a specific example of processing circuitry.

### *** Description of Operation ***

Operation will now be described.

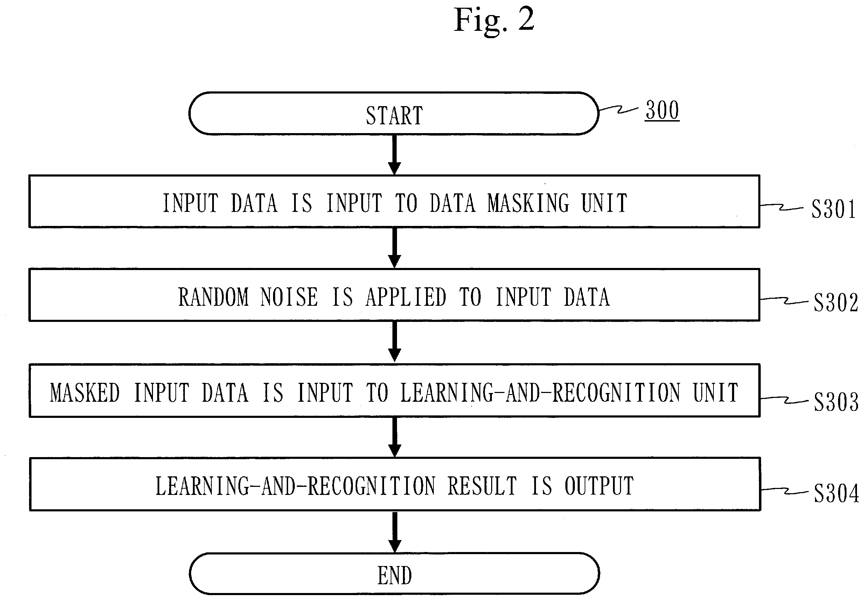

Fig. 2 is a flowchart 300 illustrating operation of the learning-and-recognition method of the learning-and-recognition apparatus 200 of this embodiment. The following processing is realized by execution of the learning-and-recognition program by the processor 910.

First in step S301, the input control unit 112 inputs, to the data masking unit 201, the input data 101 input to the reception unit 901 of the learning-and-recognition apparatus 200.

In step S302, the data masking unit 201 applies random noise to the input data 101. Note that the intensity of noise to be applied by the data masking unit 201 is set to be equivalent to or greater than noise that would be applied by an attacker, and the upper limit is a level that does not affect processing of the learning-and-recognition unit 102.

In step S303, the data masking unit 201 inputs, to the learning-and-recognition unit 102, the input data to which the random noise has been applied.

The learning-and-recognition unit 102 executes the perceptron processes 1002 in the plurality of neural network layers 1001.

In the perceptron processes 1002, the processing time of input data to which random noise has not been applied and the processing time of input data to which random noise has been applied are different.

Each of the neural network layers 1001 outputs calculation results of corresponding ones of the perceptron processes 1002.

The neural network layer 1001 that is the final layer is a learning-and-recognition result.

The learning-and-recognition unit 102 obtains the learning-and-recognition result from the input data 101 and outputs the learning-and-recognition result.

Finally in step S304, the learning-and-recognition unit 102 outputs, to the transmission unit 902, the learning-and-recognition result as the output data 103 of the learning-and-recognition apparatus 200.

The transmission unit 902 outputs the output data 103 to the outside.

As described above, in the learning-and-recognition method of this embodiment, the time control unit 111 causes the processing time on the input data 101 by the learning-and-recognition unit 102 to be independent of the input data 101.

Then, the learning-and-recognition unit 102 performs learning-and-recognition processing on the input data 101, and outputs output data.

The learning-and-recognition program of this embodiment causes a computer that executes learning-and-recognition processing to perform learning-and-recognition processing on the input data 101, to cause a time period from an input time point when the input data 101 is input to the learning-and-recognition unit 102 to an output time point when the output data 103 is output from the learning-and-recognition unit 102 to be independent of the input data, and to output the output data 103.

### *** Features of Embodiment ***

The learning-and-recognition apparatus 200 of this embodiment is characterized in that means for processing the input data 101 is added anterior to the learning-and-recognition unit 102, so as to cause the input data 101 and the processing time of the learning-and-recognition unit 102 to be independent of each other.

The learning-and-recognition apparatus 200 of this embodiment is characterized in that the means for processing the input data 101 is realized by means for applying random noise to the input data 101 of the learning-and-recognition apparatus 200.

In the learning-and-recognition apparatus 200 of this embodiment, the data masking unit 201 to apply random noise to the input data 101 is added anterior to the learning-and-recognition unit 102, so as to cause the input data 101 and the processing time of the learning-and-recognition unit 102 to be independent of each other.

The learning-and-recognition apparatus 200 of this embodiment provides a countermeasure against timing attacks by causing the processing time of the learning-and-recognition unit 102 to be a processing time dependent on the input data 101 to which random noise has been applied, by the data masking unit 201 to apply random noise to the input data 101.

### *** Effects of Embodiment ***

As described above, the learning-and-recognition apparatus 200 of this embodiment causes the processing time of the learning-and-recognition unit 102 to be dependent on the input data 101 to which random noise has been applied, so that defense against timing attacks that focus on the relationship between the input data 101 and the processing time can be provided.

### Second Embodiment

Differences from the first embodiment will be described below.

An embodiment in which an input time point distribution unit 401 to randomize an input time point when the input data 101 is input to the learning-and-recognition unit 102 is added as a countermeasure against timing attacks will be presented in this embodiment.

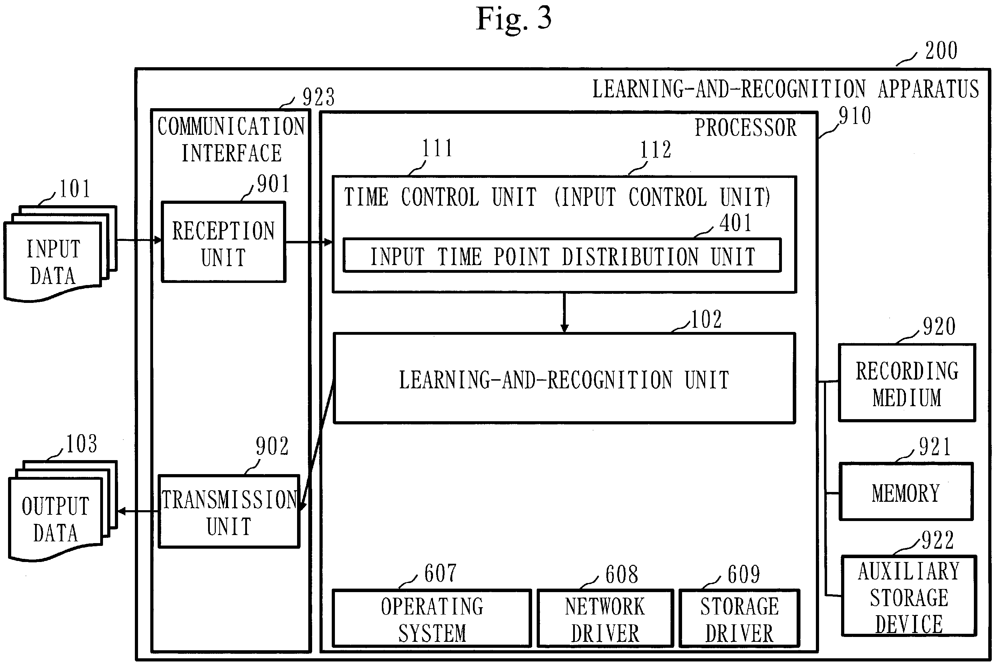

Fig. 3 is a configuration diagram of the learning-and-recognition apparatus 200.

The learning-and-recognition apparatus 200 has the time control unit 111.

The time control unit 111 has the input control unit 112.

The input control unit 112 has the input time point distribution unit 401.

The input time point distribution unit 401 randomizes an input time point when the input data 101 is input to the learning-and-recognition unit 102.

In the learning-and-recognition apparatus 200, the input time point distribution unit 401 to randomize an input time point is added anterior to the learning-and-recognition unit 102, so as to cause the input data 101 and the processing time of the learning-and-recognition apparatus 200 to be independent of each other.

Operation will now be described.

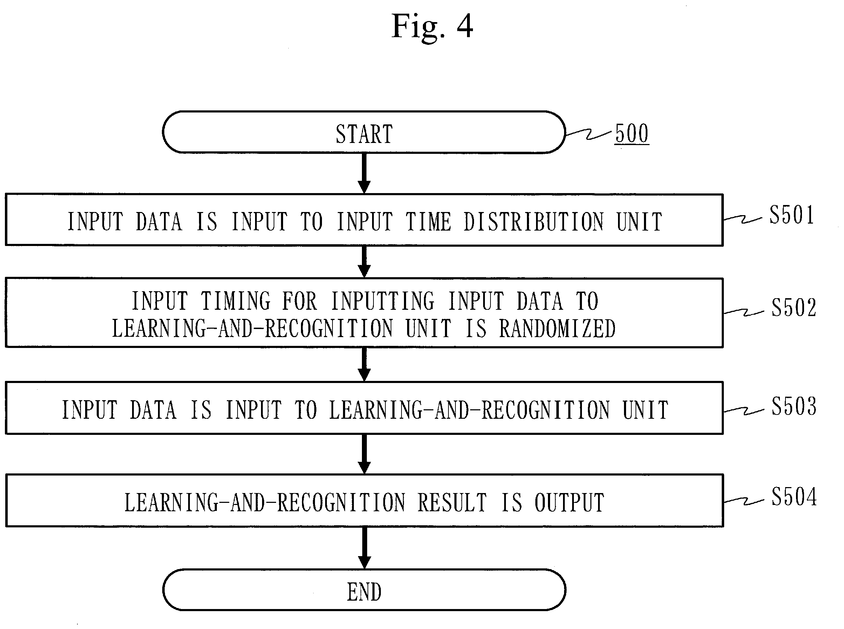

Fig. 4 is a flowchart 500 illustrating operation of the learning-and-recognition method of the learning-and-recognition apparatus 200 of this embodiment. The following processing is realized by execution of the learning-and-recognition program by the processor 910.

First in step S501, the input data 101 input to the learning-and-recognition apparatus 200 is input to the input time point distribution unit 401.

In step S502, the input time point distribution unit 401 randomizes an input time point when the input data 101 is input to the learning-and-recognition unit 102.

Specifically, the input time point distribution unit 401 randomizes a time period from a time point when the input data 101 is received by the reception unit 901 to a time point when the input data 101 is output to the learning-and-recognition unit 102.

The randomization of the input time point is realized by dummy processing, wait processing, or the like.

In step S503, the input time point distribution unit 401 inputs the input data 101 to the learning-and-recognition unit 102 according to the randomized input time point.

Finally in step S504, the learning-and-recognition unit 102 outputs a learning-and-recognition result as the output data 103.

### *** Features of Embodiment ***

The learning-and-recognition apparatus 200 of this embodiment is characterized in that means for processing input data is added anterior to the learning-and-recognition unit, so as to cause the input data 101 and the processing time of the learning-and-recognition apparatus 200 to be independent of each other.

The learning-and-recognition apparatus 200 of this embodiment is characterized in that the means for processing input data is realized by means for randomizing an input timing to the learning-and-recognition unit of the learning-and-recognition apparatus 200.

The learning-and-recognition apparatus 200 of this embodiment provides a countermeasure against timing attacks by causing the processing time of the learning-and-recognition apparatus 200 to be a processing time dependent on an input time point that results in a randomized processing time, by the input time point distribution unit 401 to randomize an input time point of the input data 101.

### *** Effects of Embodiment ***

As described above, the learning-and-recognition apparatus 200 of this embodiment causes the processing time of the learning-and-recognition apparatus 200 to be dependent on a randomized input time point, so that defense against timing attacks that focus on the relationship between the input data 101 and the processing time can be provided.

### Third Embodiment

Differences from the first embodiment will be described below.

An embodiment in which adding an output time point distribution unit 601 to randomize an output time point of the learning-and-recognition unit 102 serves as a countermeasure against timing attacks will now be presented.

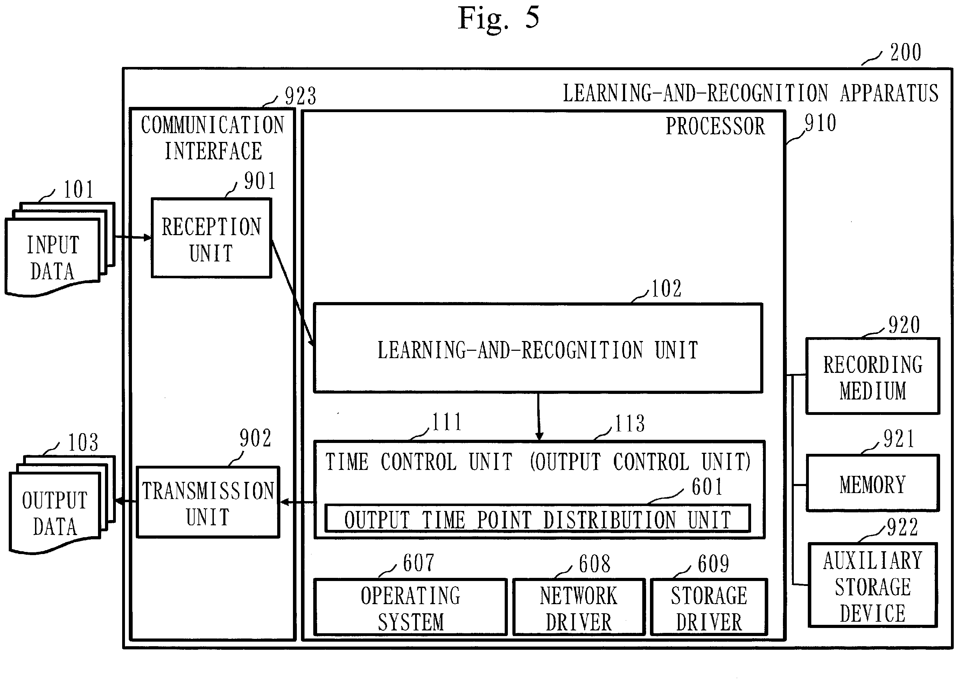

Fig. 5 is a configuration diagram of the learning-and-recognition apparatus 200.

In the learning-and-recognition apparatus 200, the output time point distribution unit 601 to randomize an output time point is added posterior to the learning-and-recognition unit 102, so as to cause the input data 101 and the processing time of the learning-and-recognition apparatus 200 to be independent of each other.

The learning-and-recognition apparatus 200 has the time control unit 111.

The time control unit 111 has an output control unit 113.

The output control unit 113 performs processing on the output data 103 to change the processing time of the learning-and-recognition apparatus 200.

The input control unit 112 has the output time point distribution unit 601.

The output time point distribution unit 601 randomizes an output time point of the output data 103.

In the learning-and-recognition apparatus 200 of this embodiment, the output time point distribution unit 601 to randomize an output time point of the output data 103 of the learning-and-recognition apparatus 200 is added posterior to the learning-and-recognition unit 102, so as to cause the input data 101 and the processing time of the learning-and-recognition apparatus 200 to be independent of each other.

Operation will now be described.

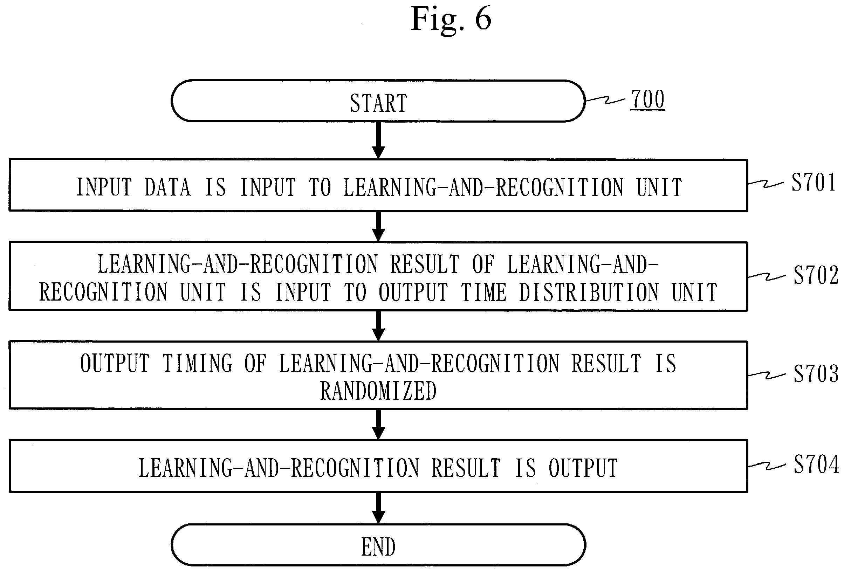

Fig. 6 is a flowchart 700 illustrating operation of the learning-and-recognition method of the learning-and-recognition apparatus 200 of this embodiment. The following processing is realized by execution of the learning-and-recognition program by the processor 910.

First in step S701, the input data 101 input to the learning-and-recognition apparatus 200 is input to the learning-and-recognition unit 102.

In step S702, a learning-and-recognition result output from the learning-and-recognition unit 102 is input to the output time point distribution unit 601.

In step S703, the output time point distribution unit 601 randomizes an output time point of the output data 103 of the learning-and-recognition apparatus 200.

Specifically, the output time point distribution unit 601 randomizes a time period from an input time point when the output data 103 is input from the learning-and-recognition unit 102 to an output time point when it is output to the transmission unit 902.

The randomization of the output time point is realized by dummy processing, wait processing, or the like.

Finally in step S704, the output time point distribution unit 601 outputs, to the transmission unit 902, the learning-and-recognition result output from the learning-and-recognition unit 102, as the output data 103, in accordance with the randomized output time point.

### *** Features of Embodiment ***

The learning-and-recognition apparatus 200 of this embodiment is characterized in that means for processing the output data 103 is added posterior to the learning-and-recognition unit 102, so as to cause the input data 101 and the processing time of the learning-and-recognition apparatus 200 to be independent of each other.

The learning-and-recognition apparatus 200 of this embodiment is characterized in that the means for processing the output data 103 is realized by means for randomizing an output timing of the learning-and-recognition apparatus 200.

The learning-and-recognition apparatus 200 of this embodiment provides a countermeasure against timing attacks by randomizing an output time point of the output data 103 by the output time point distribution unit 601, so as to cause the processing time of the learning-and-recognition apparatus 200 to be a processing time dependent on a randomized output time point.

### ***Effects of Embodiment ***

As described above, the learning-and-recognition apparatus 200 of this embodiment causes the processing time of the learning-and-recognition apparatus 200 to be dependent not on the input data 101 but on a randomized output time point of the output data 103, so that defense against timing attacks that focus on the relationship between the input data 101 and the processing time can be provided.

### Fourth Embodiment

Differences from the first embodiment will be described below.

An embodiment in which a countermeasure against timing attacks is provided by causing processing times of the learning-and-recognition unit 102 to be uniform will be presented in this embodiment.

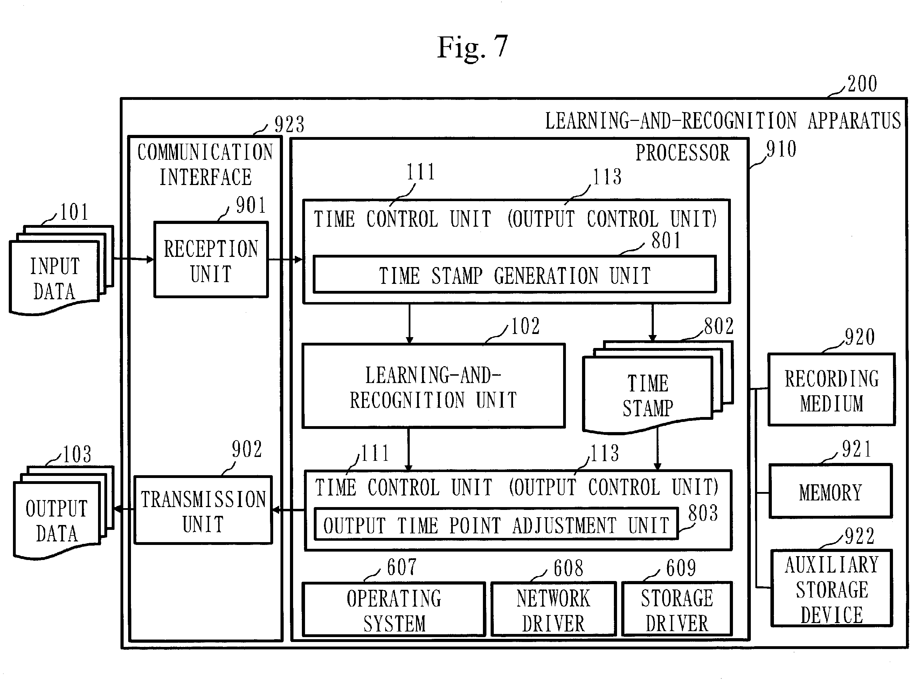

Fig. 7 is a configuration diagram of the learning-and-recognition apparatus 200.

The learning-and-recognition apparatus 200 has the time control unit 111.

The time control unit 111 has the output control unit 113.

The output control unit 113 has a time stamp generation unit 801 and an output time point adjustment unit 803.

The time stamp generation unit 801 records, as a time stamp 802, an input time point when the input data 101 is input to the time stamp generation unit 801.

The output time point adjustment unit 803 uses the time stamp 802 to cause a time period from the input time point of the input data 101 to an output time point of the output data 103 to be uniform.

The output time point adjustment unit 803 sets the output time point of the output data 103 by adding a certain period of time to the input time point of the input data 101 indicated by the time stamp 802.

In the learning-and-recognition apparatus 200, the time stamp generation unit 801 to record an input time point when the input data 101 is input to the time stamp generation unit 801 is added anterior to the learning-and-recognition unit 102, and the output time point adjustment unit 803 to cause the processing time of the learning-and-recognition unit 102 to be uniform is added posterior to the learning-and-recognition unit 102, so as to cause the input data 101 and the processing time of the learning-and-recognition apparatus 200 to be independent of each other.

Operation will now be described.

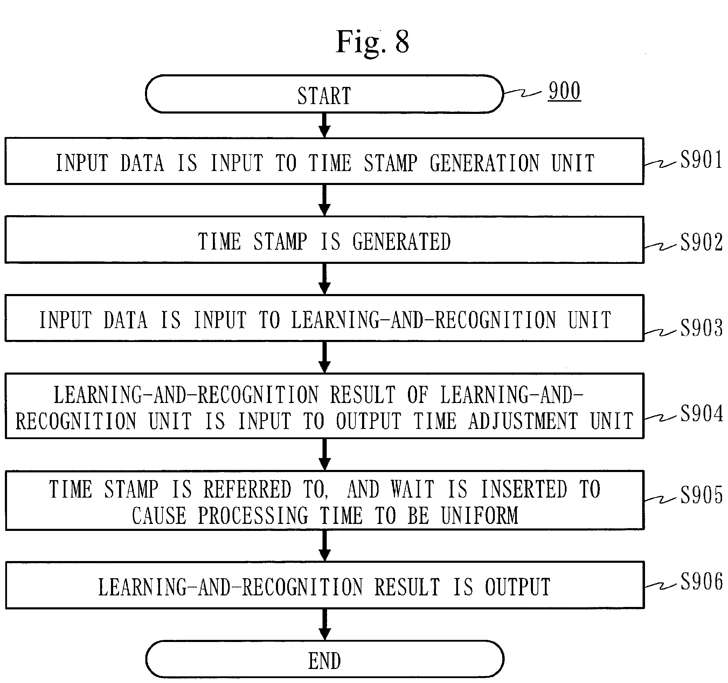

Fig. 8 is a flowchart 900 illustrating operation of the learning-and-recognition method of the learning-and-recognition apparatus 200 of this embodiment. The following processing is realized by execution of the learning-and-recognition program by the processor 910.

First in step S901, the input data 101 input to the learning-and-recognition apparatus 200 is input to the time stamp generation unit 801.

In step S902, the time stamp generation unit 801 generates a time stamp 802 according to the input time point of the input data 101.

The time stamp 802 contains the input time point when the input data 101 is input to the time stamp generation unit 801.

The time stamp 802 is stored in the memory 921.

In step S903, the time stamp generation unit 801 inputs, to the learning-and-recognition unit 102, the input data 101 for which the time stamp 802 has been recorded in the memory 921.

In step S904, the learning-and-recognition unit 102 inputs a learning-and-recognition result to the output time point adjustment unit 803.

In step S905, the output time point adjustment unit 803 refers to the time stamp 802 generated by the time stamp generation unit 801, and causes the processing time to be uniform.

Specifically, the time stamp generation unit 801 sets the output time point of the learning-and-recognition result to a time point resulting from adding a certain period of time to the input time point indicated by the time stamp 802.

Causing the processing time to be uniform is realized by dummy processing, wait processing, or the like.

Finally in step S906, the output time point adjustment unit 803 outputs, to the transmission unit 902, the learning-and-recognition result output from the learning-and-recognition unit 102, as the output data 103, in accordance with the output time point that causes the processing time to be uniform.

### *** Features of Embodiment ***

The learning-and-recognition apparatus 200 of this embodiment is characterized in that means for processing the output data 103 is added posterior to the learning-and-recognition unit 102, so as to cause the input data 101 and the processing time of the learning-and-recognition apparatus 200 to be independent of each other.

The learning-and-recognition apparatus 200 of this embodiment is characterized in that the means for processing the output data 103 is realized by means for generating a time stamp in advance of the learning-and-recognition unit 102 of the learning-and-recognition apparatus 200, and referring to the time stamp 802 and setting the output timing of the learning-and-recognition apparatus 200 so as to cause the processing time of the learning-and-recognition unit 102 to be uniform.

The learning-and-recognition apparatus 200 of this embodiment adjusts the output time point of the output data 103, independently of the input data 101, by the time stamp generation unit 801 to record the input time point of the input data 101 and the output time point adjustment unit 803 to cause the processing time of the learning-and-recognition unit 102 to be uniform.

### *** Effects of Embodiment ***

As described above, the learning-and-recognition apparatus 200 of this embodiment adjusts the output time point of the output data 103 so as to cause the processing time of the learning-and-recognition apparatus 200 to be uniform, so that defense against timing attacks that focus on the relationship between the input data 101 and the processing time can be provided.

### Fifth Embodiment

Differences from the first embodiment will be described below.

An embodiment in which a countermeasure against timing attacks is implemented in the perceptron processes 1002 of each neural network layer 1001 in the learning-and-recognition unit 102 will be presented in this embodiment.

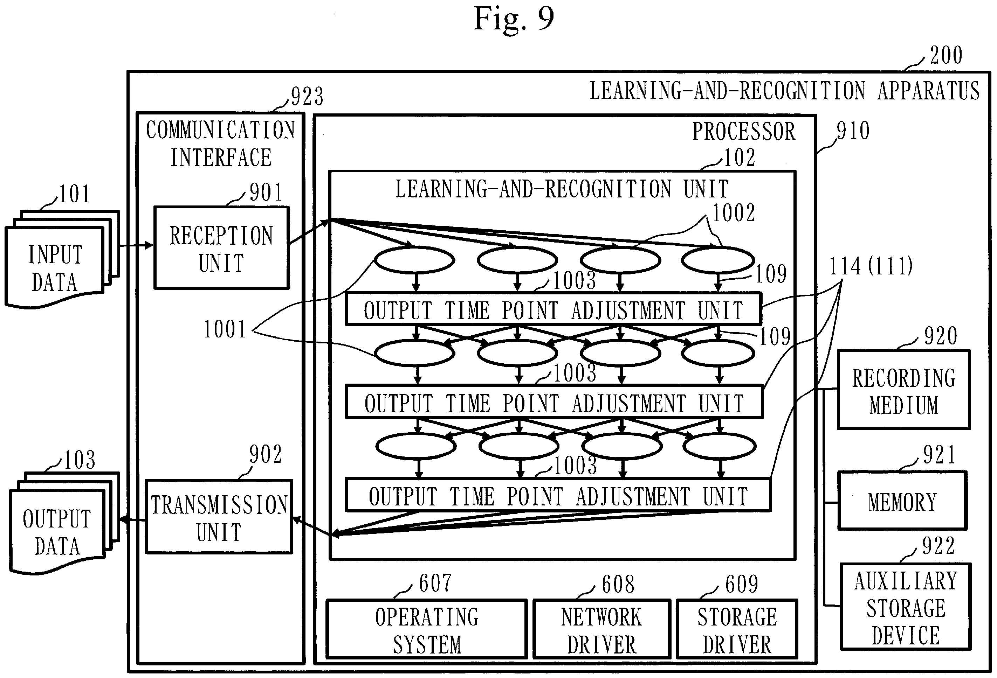

Fig. 9 is a configuration diagram of the learning-and-recognition apparatus 200.

The learning-and-recognition unit 102 has processes of a plurality of layers constituted by the neural network layers 1001.

In the learning-and-recognition apparatus 200, an output time point adjustment unit 1003 to cause output time points of processing results of perceptron processes of each neural network layer 1001 in the learning-and-recognition unit 102 to be random or uniform is added, so as to cause the input data 101 and the processing time of the learning-and-recognition unit 102 to be independent of each other.

The learning-and-recognition apparatus 200 has the time control unit 111.

The time control unit 111 has a processing control unit 114.

The processing control unit 114 controls processing time points of the learning-and-recognition unit 102 to change processing times of the learning-and-recognition unit 102.

The processing control unit 114 has a plurality of output time point adjustment units 1003.

Each of the output time point adjustment units 1003 is provided posterior to a corresponding one of the neural network layers 1001.

The neural network layers 1001 and the output time point adjustment units 1003 correspond to each other, and the number of the neural network layers 1001 and the number of the output time point adjustment units 1003 are equal. However, it is sufficient that there is at least one output time point adjustment unit 1003.

Each of the output time point adjustment units 1003 causes output time points of each layer of the learning-and-recognition unit 102 to be random or causes learning time points of each layer of the learning-and-recognition unit 102 to be uniform.

In the learning-and-recognition apparatus 200, the output time point adjustment unit 1003 to cause output time points to be random or uniform is added to the perceptron processes 1002 of each layer of the neural network layers 1001 in the learning-and-recognition unit 102, so as to cause the input data 101 and the processing time of the learning-and-recognition unit 102 to be independent of each other.

Operation will now be described.

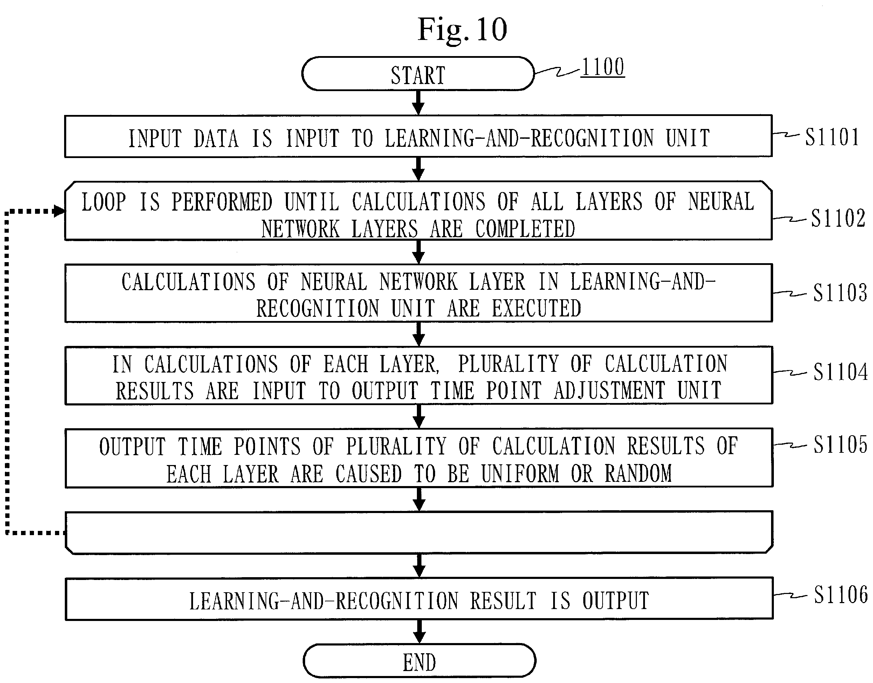

Fig. 10 is a flowchart 1100 illustrating operation of the learning-and-recognition method of the learning-and-recognition apparatus 200 of this embodiment. The following processing is realized by execution of the learning-and-recognition program by the processor 910.

First in step S1101, the input data 101 input to the learning-and-recognition apparatus 200 is input to the learning-and-recognition unit 102.

Then, the processor 910 performs processing from step S1102 to step S1105 in a loop in each layer until calculations of all layers of the neural network layers 1001 are completed.

In step S1103, the neural network layer 1001 executes the perceptron processes 1002.

In step S1104, the neural network layer 1001 inputs an output of calculation results of the perceptron processes 1002 to the output time point adjustment unit 1003.

In step S1103, the output time point adjustment unit 1003 receives the calculation results of the neural network layer 1001 as intermediate data 109, and causes output time points of the intermediate data 109 to be uniform or random.

Specifically, the output time point adjustment unit 1003 receives a plurality of processing results of a plurality of perceptron processes 1002 as a plurality of pieces of intermediate data 109, and outputs the plurality of pieces of intermediate data 109 by causing their output time points to be random or uniform.

Causing the output time points of the plurality of pieces of intermediate data 109 to be uniform or random is realized by dummy processing, wait processing, or the like.

The output time point adjustment unit 1003 receives a plurality of pieces of intermediate data 109 and simultaneously outputs the plurality of pieces of intermediate data 109, so as to cause the output time points of the intermediate data 109 to be uniform.

Alternatively, the output time point adjustment unit 1003 receives a plurality of pieces of intermediate data 109 and outputs the plurality of pieces of intermediate data 109 at mutually random time points, so as to cause the output time points of the plurality of pieces of intermediate data 109 to be random.

Causing the output time points of the plurality of pieces of intermediate data 109 to be uniform or random may be realized as part of the perceptron processes 1002.

Finally in step S1106, after calculations of all layers of the neural network layers 1001 have been completed, the learning-and-recognition unit 102 outputs a learning-and-recognition result to the transmission unit 902 as the output data 103.

### *** Features of Embodiment ***

The learning-and-recognition apparatus 200 of this embodiment is characterized in that means for processing intermediate data 109 is added between the perceptron processes 1002 of adjacent layers in the learning-and-recognition unit of the learning-and-recognition apparatus 200, so as to change the processing time of the learning-and-recognition unit 102 and to cause input data and the processing time of the learning-and-recognition apparatus 200 to be independent of each other.

The learning-and-recognition apparatus 200 of this embodiment is characterized in that the means for processing intermediate data 109 is realized by means for causing output timings of a plurality of pieces of intermediate data 109 of each layer in the learning-and recognition unit of the learning-and-recognition apparatus 200 to be random or uniform.

### *** Effects of Embodiment ***

As described above, the learning-and-recognition apparatus 200 of this embodiment causes the output time points of a plurality of pieces of intermediate data 109 to be uniform or random, so as to change the processing time of the learning-and-recognition unit 102, so that defense against timing attacks that focus on the relationship between the input data 101 and the processing time can be provided.

### *** Variation ***

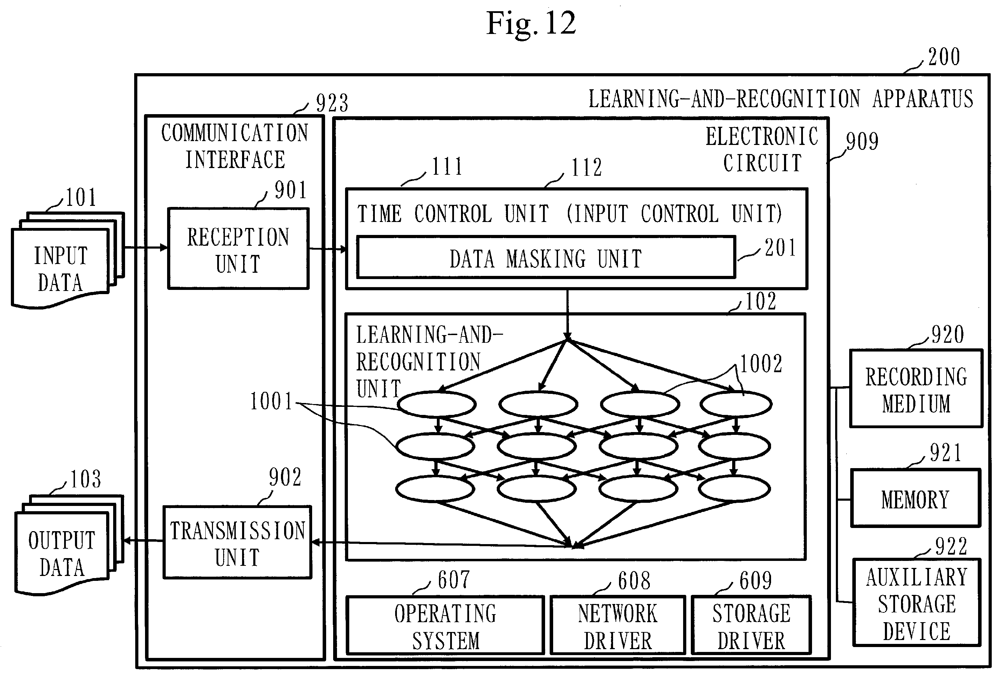

Fig. 11 is a diagram illustrating another configuration of the learning-and-recognition apparatus 200 according to this embodiment.

Fig. 11 is a variation such that the output time point adjustment units 1003 of the learning-and-recognition apparatus 200 illustrated in Fig. 9 are modified.

Each of the output time point adjustment units 1003 illustrated in Fig. 11 receives intermediate data 109 from some perceptron processes 1002 of all the perceptron processes 1002 in a corresponding one of the neural network layers 1001, instead of receiving intermediate data 109 from all the perceptron processes 1002 in the corresponding one of the neural network layers 1001.

When intermediate data 109 of a perceptron process 1002 is not received by the corresponding one of the output time point adjustment units 1003, the intermediate data 109 is directly input to the next neural network layer 1001.

### Sixth Embodiment

In this embodiment, differences from the first embodiment will be described.

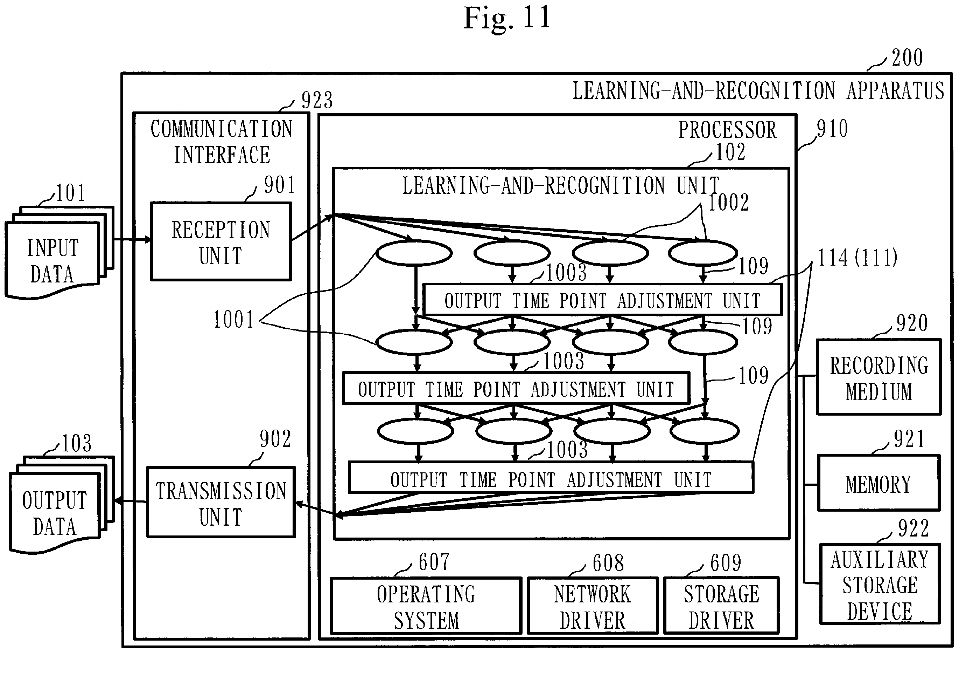

Fig. 12 is a diagram illustrating a configuration of the learning-and-recognition apparatus 200 according to this embodiment.

In Fig. 12, the processor 910 of the learning-and-recognition apparatus 200 illustrated in Fig. 1 is replaced with an electronic circuit 909.

The learning-and-recognition apparatus 200 includes the electronic circuit 909, the memory 921, the auxiliary storage device 922, the communication interface 923, and the recording medium 920.

The electronic circuit 909 is a dedicated electronic circuit that realizes the functions of the time control unit 111 and the learning-and-recognition unit 102.

Specifically, the electronic circuit 909 is a single circuit, a composite circuit, a programmed processor, a parallel-programmed processor, a logic IC, a GA, an ASIC, or an FPGA. GA is an abbreviation for Gate Array. ASIC is an abbreviation for Application Specific Integrated Circuit. FPGA is an abbreviation for Field-Programmable Gate Array.

The functions of the time control unit 111 and the learning-and-recognition unit 102 may be realized by one electronic circuit, or may be distributed among and realized by a plurality of electronic circuits.

In this embodiment, the functions of the time control unit 111 and the learning-and-recognition unit 102 may be realized by software.

Alternatively, the functions of the time control unit 111 and the learning-and-recognition unit 102 may be realized by hardware.

Alternatively, some of the functions of the time control unit 111 and the learning-and-recognition unit 102 may be realized by the electronic circuit, and the rest of the functions may be realized by software.

Each of the processor and the electronic circuit is also referred to as processing circuitry. That is, in the learning-and-recognition apparatus 200, the functions of the time control unit 111 and the learning-and-recognition unit 102 are realized by the processing circuitry.

Although not illustrated, the processor 910 of the learning-and-recognition apparatus 200 of any one of the embodiments other than the first embodiment may be replaced with the electronic circuit 909.

### *** Other Embodiments ***

In the embodiments described above, the learning-and-recognition apparatus 200 that performs recognition work while learning has been described. However, instead of the learning-and-recognition apparatus 200, a learning apparatus that performs learning or a recognition apparatus that performs recognition work may be implemented.

The embodiments have been described above. Two or more of these embodiments may be implemented in combination. Alternatively, one embodiment or a combination of two or more embodiments of these embodiments may be partially implemented. Note that the present invention is not limited to these embodiments, and various modifications are possible depending on needs.

### Reference Signs List

101: input data, 102: learning-and-recognition unit, 103: output data, 109: intermediate data, 111: time control unit, 112: input control unit, 113: output control unit, 114: processing control unit, 200: learning-and-recognition apparatus, 201: data masking unit, 401: input time point distribution unit, 601: output time point distribution unit, 607: operating system, 608: network driver, 609: storage driver, 801: time stamp generation unit, 802: time stamp, 803: output time point adjustment unit, 901: reception unit, 902: transmission unit, 909: electronic circuit, 910: processor, 920: recording medium, 921: memory, 922: auxiliary storage device, 923: communication interface, 1001: neural network layer, 1002: perceptron process, 1003: output time point adjustment unit

## Claims

1. A learning-and-recognition apparatus (200) comprising:
a learning-and-recognition unit (102) to perform learning-and-recognition processing on input data, and output output data, the learning-and-recognition unit (102) having a plurality of neural network layers (1001), each neural network layer (1001) being configured to execute a plurality of perceptron processes (1002), the output data (103) being calculation results of the perceptron processes (1002) of the final neural network layer (1001); and
a time control unit (111) to cause a processing time of the learning-and-recognition processing on the input data to be independent of the input data, as a countermeasure against a timing attack, the processing time corresponding to a time period from a time point when the input data (101) is input to the learning-and-recognition apparatus (200) to a time point when the output data (103) is output from the learning-and-recognition apparatus (200),
wherein the time control unit (111) includes an input control unit (112) to perform processing on the input data to change the processing time of the learning-and-recognition processing, and
wherein the input control unit (112) includes a data masking unit (201) and the data masking unit (201) to apply random noise to the input data (101) is added anterior to the learning-and-recognition unit (102).

2. The learning-and-recognition apparatus (200) according to claim 1,
wherein the input control unit (112) has an input time point distribution unit (401) to randomize an input time point of the input data.

3. The learning-and-recognition apparatus (200) according to claim 1,
wherein the time control unit (111) includes an output control unit (113) to perform processing on the output data to change the processing time of the learning-and-recognition processing.

4. The learning-and-recognition apparatus (200) according to claim 3,
wherein the output control unit (113) has an output time point distribution unit (601) to randomize an output time point of the output data.

5. The learning-and-recognition apparatus (200) according to claim 3,
wherein the output control unit (113) has an output time point adjustment unit (803) to cause a time period from an input time point of the input data to an output time point of the output data to be uniform.

6. The learning-and-recognition apparatus (200) according to claim 1,
wherein the time control unit (111) includes a processing control unit (114) to control a processing time point of the learning-and-recognition unit (102) to change the processing time of the learning-and-recognition processing.

7. The learning-and-recognition apparatus (200) according to claim 6,
wherein the learning-and-recognition unit (102) has processes of a plurality of layers, and
wherein the processing control unit (114) has an output time point adjustment unit (803) to randomize an output time point of each layer of the learning-and-recognition unit (102), or cause an output time point of each layer of the learning-and-recognition unit (102) to be uniform.

8. A learning-and-recognition method, executed by a by the learning-and-recognition apparatus (200), comprising:
causing a processing time of learning-and-recognition processing on input data to be independent of the input data, as a countermeasure against a timing attack, by a time control unit (111);
performing learning-and-recognition processing on the input data and outputting output data, by a learning-and-recognition unit (102) having a plurarity of neural network layers, each neural network layer (1001) being configured to execute a plurality of perceptron processes (1002), the output data (103) being calculation results of the perceptron processes (1002) of the final neural network layer (1001),
wherein the time control unit (111) performs processing on the input data to change the processing time of the learning-and-recognition processing, the processing time corresponding to a time period from a time point when the input data (101) is input to the learning-and-recognition apparatus (200) to a time point when the output data (103) is output from the learning-and-recognition apparatus (200); and
applying random noise to the input data (101) anterior to the learning-and-recognition unit (102) by a data masking unit (201) included in the time control unit (111).

9. A learning-and-recognition program for causing a computer that executes learning-and-recognition processing using a plurarity of neural network layers to:
perform learning-and-recognition processing on input data;
cause a time period from an input time point of the input data to an output time point of output data to be independent of the input data, and output the output data, as a countermeasure against a timing attack,
the learning-and-recognition program causing the computer to perform processing on the input data to change a processing time of the learning-and-recognition processing, and
apply random noise to the input data anterior learning-and-recognition processing on input data, wherein
each neural network layer is configured to execute a plurality of perceptron processes,
the output data is calculation results of the perceptron processes of the final neural network layer, and
the processing time corresponding to a time period from a time point when the input data is input to the learning-and-recognition apparatus to a time point when the output data is output from the learning-and-recognition apparatus.

## Patentansprüche

1. Lern- und Erkennungsvorrichtung (200), umfassend:
eine Lern- und Erkennungseinheit (102) zum Durchführen einer Lern- und Erkennungsverarbeitung an Eingabedaten und zum Ausgeben von Ausgabedaten, wobei die Lern- und Erkennungseinheit (102) eine Vielzahl von Schichten eines neuronalen Netzwerks (1001) aufweist, wobei jede Schicht eines neuronalen Netzwerks (1001) eingerichtet ist, eine Vielzahl von Perzeptron-Prozessen (1002) auszuführen, wobei die Ausgabedaten (103) Berechnungsergebnisse der Perzeptron-Prozesse (1002) der letzten neuronalen Netzwerkschicht (1001) sind; und
eine Zeitsteuereinheit (111) zum Veranlassen, dass eine Verarbeitungszeit der Lern- und Erkennungsverarbeitung an den Eingabedaten unabhängig von den Eingabedaten ist, als eine Gegenmaßnahme gegen einen Timing-Angriff, wobei die Verarbeitungszeit einer Zeitperiode von einem Zeitpunkt, an dem die Eingabedaten (101) in die Lern- und Erkennungsvorrichtung (200) eingegeben werden, bis zu einem Zeitpunkt, an dem die Ausgabedaten (103) von der Lern- und Erkennungsvorrichtung (200) ausgegeben werden, entspricht,
wobei die Zeitsteuereinheit (111) eine Eingabesteuereinheit (112) enthält zum Durchführen von Verarbeitung der Eingabedaten, um die Verarbeitungszeit der Lern- und Erkennungsverarbeitung zu ändern, und
wobei die Eingabesteuereinheit (112) eine Datenmaskierungseinheit (201) aufweist und die Datenmaskierungseinheit (201) zum Aufbringen von Zufallsrauschen auf die Eingabedaten (101) vor der Lern- und Erkennungseinheit (102) hinzugefügt wird.

2. Lern- und Erkennungsvorrichtung (200) nach Anspruch 1,
wobei die Eingabesteuereinheit (112) eine Eingabezeitpunktverteilungseinheit (401) aufweist, um einen Eingabezeitpunkt der Eingabedaten zu randomisieren.

3. Lern- und Erkennungsvorrichtung (200) nach Anspruch 1,
wobei die Zeitsteuereinheit (111) eine Ausgabesteuereinheit (113) aufweist zum Durchführen von Verarbeitung der Ausgabedaten, um die Verarbeitungszeit der Lern- und Erkennungsverarbeitung zu ändern.

4. Lern- und Erkennungsvorrichtung (200) nach Anspruch 3,
wobei die Ausgabesteuereinheit (113) eine Ausgabezeitpunktverteilungseinheit (601) aufweist zum Randomisieren eines Ausgabezeitpunkts der Ausgabedaten.

5. Lern- und Erkennungsvorrichtung (200) nach Anspruch 3,
wobei die Ausgabesteuereinheit (113) eine Ausgabezeitpunktanpassungseinheit (803) aufweist zum Veranlassen, dass eine Zeitperiode von einem Eingabezeitpunkt der Eingabedaten zu einem Ausgabezeitpunkt der Ausgabedaten einheitlich ist.

6. Lern- und Erkennungsvorrichtung (200) nach Anspruch 1,
wobei die Zeitsteuereinheit (111) eine Verarbeitungssteuereinheit (114) aufweist zum Steuern eines Verarbeitungszeitpunkts der Lern- und Erkennungseinheit (102), um die Verarbeitungszeit der Lern- und Erkennungsverarbeitung zu ändern.

7. Lern- und Erkennungsvorrichtung (200) nach Anspruch 6,
wobei die Lern- und Erkennungseinheit (102) Prozesse aus einer Vielzahl von Schichten aufweist, und
wobei die Verarbeitungssteuereinheit (114) eine Ausgabezeitpunktanpassungseinheit (803) aufweist zum Randomisieren eines Ausgabezeitpunkts jeder Schicht der Lern- und Erkennungseinheit (102) oder zum Veranlassen, dass ein Ausgabezeitpunkt jeder Schicht der Lern- und Erkennungseinheit (102) einheitlich ist.

8. Lern- und Erkennungsverfahren, das von der Lern- und Erkennungsvorrichtung (200) ausgeführt wird, umfassend:
Veranlassen, dass eine Verarbeitungszeit der Lern- und Erkennungsverarbeitung an den Eingabedaten unabhängig von den Eingabedaten ist, als eine Gegenmaßnahme gegen einen Timing-Angriff, durch eine Zeitsteuereinheit (111);
Durchführen einer Lern- und Erkennungsverarbeitung an den Eingabedaten und Ausgeben von Ausgabedaten, wobei eine Lern- und Erkennungseinheit (102) eine Vielzahl von Schichten eines neuronalen Netzwerks aufweist, wobei jede Schicht eines neuronalen Netzwerks (1001) eingerichtet ist, eine Vielzahl von Perzeptron-Prozessen (1002) auszuführen, wobei die Ausgabedaten (103) Berechnungsergebnisse der Perzeptron-Prozesse (1002) der letzten Schicht eines neuronalen Netzwerks (1001) sind,
wobei die Zeitsteuereinheit (111) eine Verarbeitung an den Eingabedaten durchführt, um die Verarbeitungszeit der Lern- und Erkennungsverarbeitung zu ändern, wobei die Verarbeitungszeit einer Zeitperiode von einem Zeitpunkt, an dem die Eingabedaten (101) in die Lern- und Erkennungsvorrichtung (200) eingegeben werden, bis zu einem Zeitpunkt, an dem die Ausgabedaten (103) von der Lern- und Erkennungsvorrichtung (200) ausgegeben werden, entspricht; und
Aufbringen von Zufallsrauschen auf die Eingabedaten (101) vor der Lern- und Erkennungseinheit (102) durch eine Datenmaskierungseinheit (201), die in der Zeitsteuereinheit (111) enthalten ist.

9. Lern- und Erkennungsprogramm zum Veranlassen eines Computers, der eine Lern- und Erkennungsverarbeitung unter Verwendung einer Vielzahl von Schichten eines neuronalen Netzes ausführt, zum: Durchführen einer Lern- und Erkennungsverarbeitung an Eingabedaten;
Veranlassen, dass eine Zeitperiode von einem Eingabezeitpunkt der Eingabedaten bis zu einem Ausgabezeitpunkt der Ausgabedaten unabhängig von den Eingabedaten ist, und Ausgeben der Ausgabedaten, als Gegenmaßnahme gegen einen Timing-Angriff,
wobei das Lern- und Erkennungsprogramm den Computer veranlasst, eine Verarbeitung an den Eingabedaten durchzuführen, um eine Verarbeitungszeit der Lern- und Erkennungsverarbeitung zu ändern, und
Anwenden von Zufallsrauschen auf die Eingabedaten vor der Lern- und Erkennungsverarbeitung an den Eingabedaten, wobei
jede Schicht des neuronalen Netzwerks eingerichtet ist, eine Vielzahl von Perzeptron-Prozessen auszuführen,
die Ausgabedaten Berechnungsergebnisse der Perzeptron-Prozesse der letzten Schicht des neuronalen Netzwerks sind, und
die Verarbeitungszeit einer Zeitperiode von einem Zeitpunkt, zu dem die Eingabedaten in die Lern- und Erkennungsvorrichtung eingegeben werden, bis zu einem Zeitpunkt, zu dem die Ausgabedaten von der Lern- und Erkennungsvorrichtung ausgegeben werden, entspricht.

## Revendications

1. Appareil d'apprentissage et de reconnaissance (200), comprenant :
une unité d'apprentissage et de reconnaissance (102) pour effectuer un traitement d'apprentissage et de reconnaissance sur des données d'entrée, et délivrer en sortie des données de sortie, l'unité d'apprentissage et de reconnaissance (102) présentant une pluralité de couches de réseau neuronal (1001), chaque couche de réseau neuronal (1001) étant configurée pour exécuter une pluralité de processus de perceptron (1002), les données de sortie (103) étant des résultats de calcul des processus de perceptron (1002) de la couche de réseau neuronal finale (1001) ; et
une unité de contrôle de temps (111) pour amener un temps de traitement du traitement d'apprentissage et de reconnaissance sur les données d'entrée à être indépendant des données d'entrée, en tant que contre-mesure contre une attaque temporelle, le temps de traitement correspondant à une période de temps allant d'un point temporel où les données d'entrée (101) sont entrées dans l'appareil d'apprentissage et de reconnaissance (200) à un point temporel où les données de sortie (103) sont délivrées en sortie à partir de l'appareil d'apprentissage et de reconnaissance (200),
dans lequel l'unité de contrôle de temps (111) comprend une unité de contrôle d'entrée (112) pour effectuer un traitement sur les données d'entrée afin de modifier le temps de traitement du traitement d'apprentissage et de reconnaissance, et
dans lequel l'unité de contrôle d'entrée (112) comprend une unité de masquage de données (201) et l'unité de masquage de données (201) pour appliquer un bruit aléatoire aux données d'entrée (101) est ajoutée en amont de l'unité d'apprentissage et de reconnaissance (102).

2. Appareil d'apprentissage et de reconnaissance (200) selon la revendication 1,
dans lequel l'unité de contrôle d'entrée (112) comporte une unité de distribution de point temporel d'entrée (401) pour randomiser un point temporel d'entrée des données d'entrée.

3. Appareil d'apprentissage et de reconnaissance (200) selon la revendication 1,
dans lequel l'unité de contrôle de temps (111) comprend une unité de contrôle de sortie (113) pour effectuer un traitement sur les données de sortie afin de modifier le temps de traitement du traitement d'apprentissage et de reconnaissance.

4. Appareil d'apprentissage et de reconnaissance (200) selon la revendication 3,
dans lequel l'unité de contrôle de sortie (113) présente une unité de distribution de point temporel de sortie (601) pour randomiser un point temporel de sortie des données de sortie.

5. Appareil d'apprentissage et de reconnaissance (200) selon la revendication 3,
dans lequel l'unité de contrôle de sortie (113) présente une unité d'ajustement de point temporel de sortie (803) pour amener une période de temps allant d'un point temporel d'entrée des données d'entrée à un point temporel de sortie des données de sortie à être uniforme.

6. Appareil d'apprentissage et de reconnaissance (200) selon la revendication 1,
dans lequel l'unité de contrôle de temps (111) comprend une unité de contrôle de traitement (114) pour contrôler un point temporel de traitement de l'unité d'apprentissage et de reconnaissance (102) pour changer le temps de traitement du traitement d'apprentissage et de reconnaissance.

7. Appareil d'apprentissage et de reconnaissance (200) selon la revendication 6,
dans lequel l'unité d'apprentissage et de reconnaissance (102) comporte des processus d'une pluralité de couches, et
dans lequel l'unité de contrôle de traitement (114) présente une unité d'ajustement de point temporel de sortie (803) pour randomiser un point temporel de sortie de chaque couche de l'unité d'apprentissage et de reconnaissance (102), ou pour rendre uniforme un point temporel de sortie de chaque couche de l'unité d'apprentissage et de reconnaissance (102).

8. Procédé d'apprentissage et de reconnaissance, exécuté par l'appareil d'apprentissage et de reconnaissance (200), comprenant les étapes consistant à :
amener un temps de traitement d'un traitement d'apprentissage et de reconnaissance sur des données d'entrée à être indépendant des données d'entrée, en tant que contre-mesure contre une attaque temporelle, par l'intermédiaire d'une unité de contrôle de temps (111) ;
effectuer un traitement d'apprentissage et de reconnaissance sur les données d'entrée et délivrer en sortie des données de sortie, par l'intermédiaire d'une unité d'apprentissage et de reconnaissance (102) présentant une pluralité de couches de réseau neuronal, chaque couche de réseau neuronal (1001) étant configurée pour exécuter une pluralité de processus de perceptron (1002), les données de sortie (103) étant des résultats de calcul des processus de perceptron (1002) de la couche de réseau neuronal finale (1001),
dans lequel l'unité de contrôle de temps (111) effectue un traitement sur les données d'entrée pour modifier le temps de traitement du traitement d'apprentissage et de reconnaissance, le temps de traitement correspondant à une période de temps allant d'un point temporel où les données d'entrée (101) sont entrées dans l'appareil d'apprentissage et de reconnaissance (200) à un point temporel où les données de sortie (103) sont délivrées en sortie à partir de l'appareil d'apprentissage et de reconnaissance (200) ; et
appliquer un bruit aléatoire aux données d'entrée (101) avant l'unité d'apprentissage et de reconnaissance (102) par l'intermédiaire d'une unité de masquage de données (201) incluse dans l'unité de contrôle de temps (111).

9. Programme d'apprentissage et de reconnaissance pour amener un ordinateur qui exécute un traitement d'apprentissage et de reconnaissance en utilisant une pluralité de couches de réseau neuronal à : effectuer un traitement d'apprentissage et de reconnaissance sur des données d'entrée ;
amener une période de temps allant d'un point temporel d'entrée des données d'entrée à un point temporel de sortie des données de sortie à être indépendante des données d'entrée, et délivrer en sortie les données de sortie, en tant que contre-mesure contre une attaque temporelle,
le programme d'apprentissage et de reconnaissance amenant l'ordinateur à effectuer un traitement sur les données d'entrée pour modifier un temps de traitement du traitement d'apprentissage et de reconnaissance, et
appliquer un bruit aléatoire aux données d'entrée avant le traitement d'apprentissage et de reconnaissance antérieur sur des données d'entrée, dans lequel
chaque couche de réseau neuronal est configurée pour exécuter une pluralité de processus de perceptron,
les données de sortie sont des résultats de calcul des processus de perceptron de la couche de réseau neuronal finale, et
le temps de traitement correspondant à une période de temps allant d'un point temporel lorsque les données d'entrée sont entrées dans l'appareil d'apprentissage et de reconnaissance à un point temporel lorsque les données de sortie sont délivrées en sortie à partir de l'appareil d'apprentissage et de reconnaissance.
